# EUROPEAN PATENT SPECIFICATION

(11) **EP 3 184 476 B1**
(45) Date of publication and mention of the grant of the patent: **01.04.2020**
(21) Application number: 16205975.2
(22) Date of filing: 21.12.2016
(51) Int. Cl.: B66B 1/46

(54) **USER-CUSTOMIZED ELEVATOR FLOOR SELECTION**
BENUTZERDEFINIERTE AUFZUGSBODENAUSWAHL
SÉLECTION D'ÉTAGE D'ASCENSEUR PERSONNALISÉE PAR L'UTILISATEUR

(30) Priority: 22.12.2015 US 201562270632 P
(43) Date of publication of application: 28.06.2017
(73) Proprietor: Otis Elevator Company, Farmington CT 06032 (US)
(72) Inventor: SIMCIK, Paul A., Farmington, CT Connecticut 06032 (US)
(74) Representative: Dehns

(56) References cited:
- EP-A1- 2 730 530
- WO-A1-2014/116182
- WO-A1-2015/121294
- WO-A2-2006/000618

## Description

### BACKGROUND

Existing elevator systems allow a user to select a destination floor using their own mobile device (e.g., a smartphone). In a typical system, the floors of the building are presented on a display screen of the mobile device, and the user can select a destination floor from a list of available floors. Exemplary systems for accessing an elevator system are disclosed in U.S. provisional patent application serial number 62/092,368 and U.S. provisional patent application serial number 62/074,178, the contents of both of which are incorporated herein by reference. For large buildings, the list of available floors can be cumbersome to navigate, requiring the user to scroll through lists of floors or the floors are presented in a small format making the available floors difficult to read and select.

WO2006/000618 discloses a method and apparatus for making input calls by means of a wireless call input device, such as a user's mobile telephone. The destination floor alternatives can also be programmed to the call input device by the user. WO2015/121294 discloses a method for operating an elevator installation, including a mobile radio for carrying out the method. WO2014/116182 discloses a system for controlling lift access including a server configured to receive lift requests from a mobile device. EP2730530 discloses a method for giving a destination call to the control system of an elevator system in which one or more predetermined departure floor-destination floor pairs are presented on a touch sensitive display.

### BRIEF SUMMARY

According to the present invention there is provided a method as defined in claim 1.

Embodiments of the method may include wherein selecting the building comprises selecting a default building.

Embodiments of the method may include wherein selecting the building comprises selecting the last building visited by a user.

Embodiments of the method may include wherein selecting the building comprises receiving a building selection from a user.

Embodiments of the method may include changing from the custom user interface including the custom floors to a standard user interface including the floors in the building.

According to another aspect of the present invention there is provided a mobile device as defined by claim 4.

Embodiments of the mobile device may include wherein selecting the building comprises selecting a default building.

Embodiments of the mobile device may include wherein selecting the building comprises selecting the last building visited by a user.

Embodiments of the mobile device may include wherein selecting the building comprises receiving a building selection from a user.

Embodiments of the mobile device may include the operations further comprising changing from the custom user interface including the custom floors to a standard user interface including the floors in the building.

According to another aspect of the present invention there is provided a computer program product tangibly embodied on a computer readable medium, as defined by claim 7.

Embodiments of the computer program product may include wherein selecting the building comprises selecting a default building.

Embodiments of the computer program product may include wherein selecting the building comprises selecting the last building visited by a user.

Embodiments of the computer program product may include wherein selecting the building comprises receiving a building selection from a user.

Embodiments of the computer program product may include the operations further comprising changing from the custom user interface including the custom floors to a standard user interface including the floors in the building.

Technical effects of embodiments include the ability to provide a user interface for generating elevator calls to an elevator system. The user interface presents a set of custom floors designated by the user.

### BRIEF DESCRIPTION OF THE DRAWINGS

The present disclosure is illustrated by way of example and not limited in the accompanying figures in which like reference numerals indicate similar elements.
FIG. 1 depicts an elevator system in an exemplary embodiment;
FIG. 2 depicts a standard user interface in an exemplary embodiment;
FIG. 3 depicts a set up interface in an exemplary embodiment;
FIG. 4 depicts a custom user interface in an exemplary embodiment; and
FIG. 5 depicts a flowchart of a process for generating a custom user interface in an exemplary embodiment.

### DETAILED DESCRIPTION

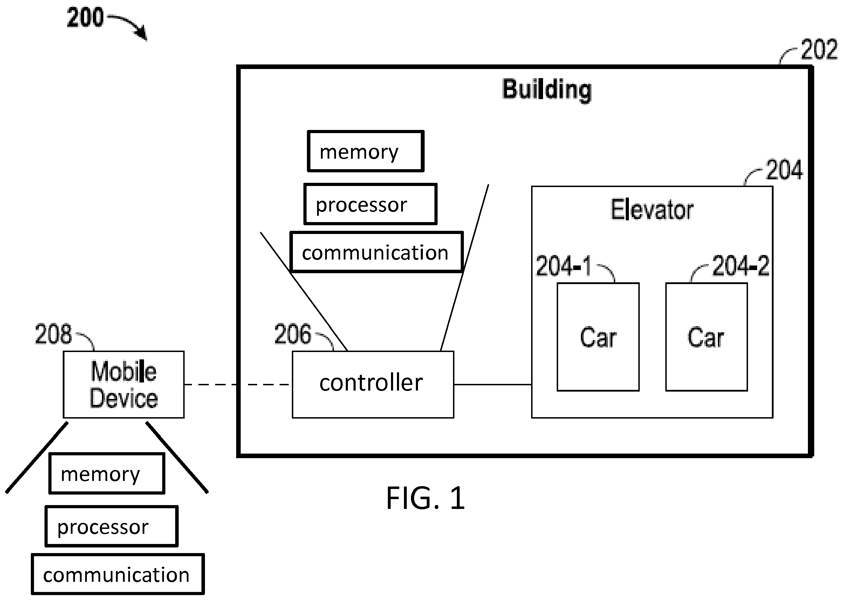

FIG. 1 depicts an elevator system 200 in an exemplary embodiment. The elevator system 200 is shown installed at a building 202. In some embodiments, the building 202 may be an office building or a collection of office buildings that may or may not be physically located near each other. The building 202 may include a number of floors. Persons entering the building 202 may enter at a lobby floor, and may go to a destination floor via one or more conveyance devices, such as an elevator 204.

The elevator 204 may be coupled to one or more computing devices, such as a controller 206. The controller 206 may be configured to control dispatching operations for one or more elevator cars (e.g., cars 204-1, 204-2) associated with the elevator 204. The elevator cars 204-1 and 204-2 may be located in the same hoistway or in different hoistways so as to allow coordination amongst elevator cars in different elevator banks serving different floors. It is understood that other components of the elevator system 200 (e.g., drive, counterweight, safeties, etc.) are not depicted for ease of illustration.

Also shown in FIG. 1 is a mobile device 208. The mobile device 208 may include a device that is typically carried by a person, such as a phone, PDA, etc. The mobile device 208 may include a processor, memory and communication module as shown in FIG. 1. The processor can be any type or combination of computer processors, such as a microprocessor, microcontroller, digital signal processor, application specific integrated circuit, programmable logic device, and/or field programmable gate array. The memory is an example of a non-transitory computer readable storage medium tangibly embodied in the mobile device 208 including executable instructions stored therein, for instance, as firmware. The communication module may implement one or more communication protocols as described in further detail herein.

The controller 206 may include a processor, memory and communication module as shown in FIG. 1. The processor can be any type or combination of computer processors, such as a microprocessor, microcontroller, digital signal processor, application specific integrated circuit, programmable logic device, and/or field programmable gate array. The memory is an example of a non-transitory computer readable storage medium tangibly embodied in the controller 206 including executable instructions stored therein, for instance, as firmware. The communication module may implement one or more communication protocols as described in further detail herein.

The mobile device 208 and the controller 206 communicate with one another. For example, the mobile device 208 and the controller 206 may communicate with one another when proximate to one another (e.g., within a threshold distance). The mobile device 208 and the controller 206 may communicate over a wireless network, such as 802.11x (WiFi), short-range radio (Bluetooth), etc. In some embodiments, the controller 206 may include, or be associated with (e.g., communicatively coupled to) a networked element, such as kiosk, beacon, hall call fixture, lantern, bridge, router, network node, etc. The networked element may communicate with the mobile device 208 using one or more communication protocols or standards. For example, the networked element may communicate with the mobile device 208 using near field communications (NFC). In other embodiments, the controller 206 may establish communication with a mobile device 208 that is outside of the building 202. This connection may be established with various technologies including GPS, triangulation, or signal strength detection, by way of non-limiting example. Such technologies that allow early communication will provide users and the systems more time to establish the most efficient passenger flow, and may eliminate the need for a user to stop moving to interact with the system.

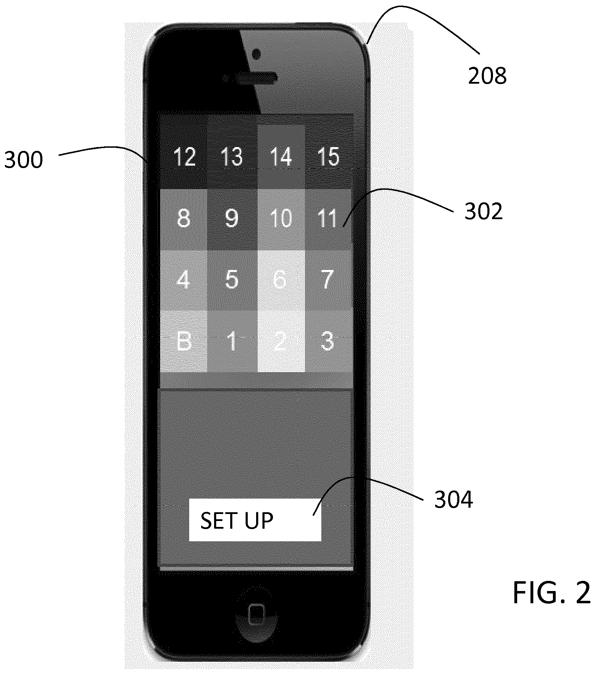

Customization of a user interface presented on the mobile device 208 is described with reference to FIGs. 2-4. Referring to FIG. 2, when the mobile device 208 launches the user interface application, the user interface may default to the last building the user visited. Alternatively, the user can designate a default building to be used at all times or the user can designate a new building (e.g., by selecting from a list of buildings or entering a building address). The mobile device 208 may store a list of buildings and the number of floors in each building in internal memory. Upon launching the user interface for the first time for a particular building, a user is presented with a standard interface 300, such as that shown in FIG. 2. The standard interface 300 is just one example of a user interface to the elevator system, and other configurations may be employed. The standard interface 300 includes a plurality of floor icons 302, each floor icon 302 corresponding to a single floor. The number of floor icons 302 corresponds to the total number of floors in the building accessible by the elevator system.

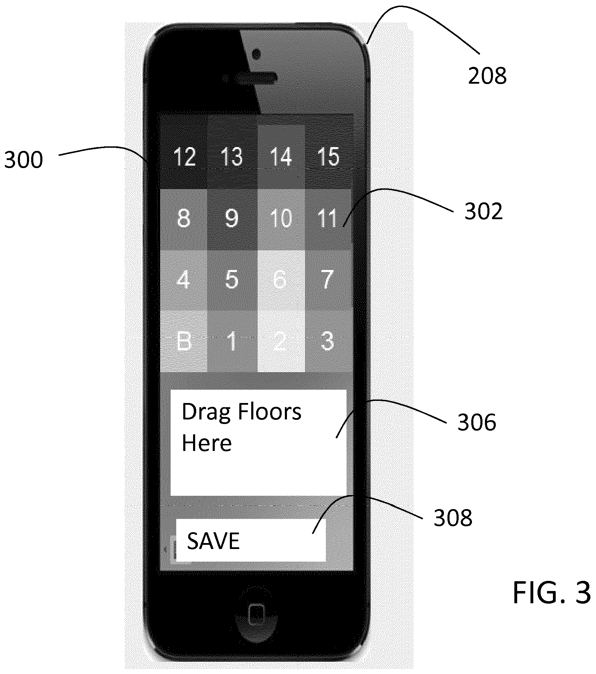

In order to customize the user interface, the user may select a set up icon 304. Upon selecting the set up icon 304, a setup interface is presented, such as that shown in FIG. 3. The user interface of FIG. 3 allows the user to select a subset of all the floors as custom floors and then save those custom floors for the current building. In one embodiment, the user may select custom floors by selecting floor icon(s) 302 and dragging the selected floor icon(s) 302 to a certain region 306 and then selecting a save icon 308. Alternatively, the user may select custom floors by clicking on selected floor icons 302 and then selecting save icon 308. In other embodiments, the using can check a box associated with each floor (e.g., +/- or add/remove) to designate a subset of all the floors as the custom floors.

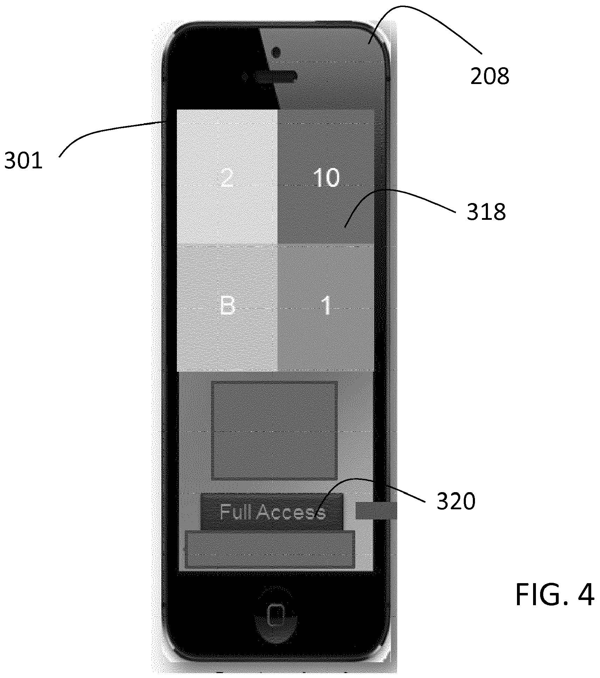

Once the user selects the save icon 308 in FIG. 4, the user interface is customized as shown in FIG. 4. As shown in FIG. 4, the custom user interface 301 displays only custom floor icons 318, rather than the standard floor icons 302. Each custom floor icon 318 represents a single floor of the building. If desired, the user can revert to the standard user interface by selecting the full access icon 320.

To request elevator service, the user enters a departure floor and a destination floor. The departure floor corresponds to where the user wishes to board the elevator and the destination floor corresponds to the floor to which the user wishes to travel. For example, referring to FIG. 4, if the user wanted to travel from floor 1 to floor 10, the user could tap the custom floor icon 318 for floor 1 and then tap the custom floor icon 318 for floor 10. In another embodiment, the user may "click and drag" the custom floor icon 318 for floor 1 onto the custom floor icon 318 for floor 10. This departure floor and destination floor form an elevator call, which is communicated to the controller 206, which then directs an elevator car 204-1 to the user.

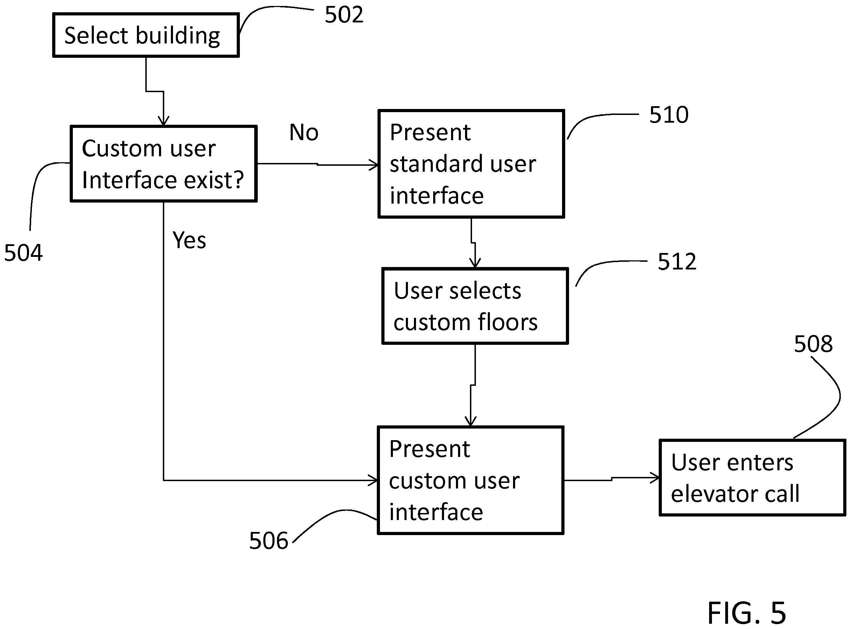

FIG. 5 is flowchart of operations performed on the mobile device 208. The process begins at 502 where a building is selected. In one embodiment, the user can specify a default building that is selected every time the user interface application is executed. In another embodiment, the mobile device 208 uses the last building visited as the selected building. In yet another embodiment, the user enters a selected building by choosing from a list of buildings stored in mobile device 208 or entering a building address.

At 504, the mobile device 208 determines if a custom user interface exists for the selected building. If the user has already set up a custom user interface for the selected building, then flow proceeds to 506 where the custom user interface (such as that of FIG. 4) is presented to the user on the mobile device 208. At 506, the user may revert to the standard user interface 300 by selecting the full access icon 320 of FIG. 4. Flow proceeds to 508 where the user enters an elevator call as described above. The elevator call (based on the departure floor and destination floor) is then transmitted from the mobile device 208 to the controller 206.

If at 504, a custom user interface does not exist for the selected building, flow proceeds to 510 where the standard user interface 300 is presented on the mobile device 208. At 512, the user can set up the custom user interface by selecting the custom floors, as described above with reference to FIG. 3. The custom floors are then saved and flow proceeds to 506 where the custom user interface is presented on the mobile device 208.

Embodiments enhance existing systems by allowing the individual user to configure the floors displayed on the user interface based upon their own usage of the floors in the building. The user specifies the floors in the building that are accessed by the user. Embodiments use this data per building to create a display of floors that only include the floors used by the individual owner of the mobile device. Embodiments allow the user full access to floors in the building in case they need to travel to a unique floor occasionally. Providing the custom user interface minimizes time needed by the user to select desired departure floors and destination floors. The custom user interface reduces the screen display space on mobile device for buildings with many floors that are rarely or never used.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the disclosure has been described in detail in connection with only a limited number of embodiments, it should be readily understood that the disclosure is not limited to such disclosed embodiments. Accordingly, the disclosure is not to be seen as limited by the foregoing description, but is only limited by the scope of the appended claims.

## Claims

1. A method for generating a custom user interface on a mobile device (208) for interfacing with an elevator system (200), the method comprising:
selecting a building (202);
presenting an identification of floors in the building;
receiving a selection of a plurality of custom floors, the custom floors being a subset of the floors;
saving the custom floors; and
generating the custom user interface in response to the custom floors;
**characterized by**:
receiving a departure floor and a destination floor in response to selection of a first floor icon (302) in the custom user interface and a second floor icon in the custom user interface, each floor icon (302) corresponding to a single floor; and
transmitting an elevator call in response to the departure floor and the destination floor.

2. The method of claim 1 wherein selecting the building comprises:
selecting a default building; or
selecting the last building visited by a user; or
receiving a building selection from a user.

3. The method of any preceeding claim further comprising changing from the custom user interface (301) including the custom floors to a standard user interface (300) including the floors in the building.

4. A mobile device (208) comprising:
a processor;
a memory comprising computer-executable instructions that, when executed by the processor, cause the processor to perform operations, the operations comprising:
selecting a building (202);
presenting an identification of floors in the building;
receiving a selection of a plurality of custom floors, the custom floors being a subset of the floors;
saving the custom floors; and
generating a custom user interface (301) in response to the custom floors;
**characterized by**:
receiving a departure floor and a destination floor in response to selection of a first floor icon (302) in the custom user interface and a second floor icon in the custom user interface, each floor icon corresponding to a single floor; and
transmitting an elevator call in response to the departure floor and the destination floor.

5. The mobile device of claim 4, wherein selecting the building (202) comprises:
selecting a default building or;
selecting the last building visited by a user; or
receiving a building selection from a user.

6. The mobile device of claim 4 or 5, the operations further comprising:
changing from the custom user interface (301) including the custom floors to a standard user interface (300) including the floors in the building.

7. A computer program product tangibly embodied on a computer readable medium, the computer program product including instructions that, when executed by a processor, cause the processor to perform operations comprising:
selecting a building;
presenting an identification of floors in the building;
receiving a selection of a plurality of custom floors, the custom floors being a subset of the floors;
saving the custom floors; and
generating a custom user interface (301) in response to the custom floors;
**characterized by**:
receiving a departure floor and a destination floor in response to selection of a first floor icon (302) in the custom user interface and a second floor icon in the custom user interface, each floor icon (302) corresponding to a single floor; and
transmitting an elevator call in response to the departure floor and the destination floor.

8. The computer program product of claim 7, wherein selecting the building (202) comprises:
selecting a default building; or
selecting the last building visited by a user; or
receiving a building selection from a user.

9. The computer program product of claim 7 or 8, the operations further comprising:
changing from the custom user interface (301) including the custom floors to a standard user interface (300) including the floors in the building.

## Patentansprüche

1. Verfahren zum Erzeugen einer definierten Benutzeroberfläche auf einer mobilen Vorrichtung (208) zum Bedienen eines Aufzugsystems (200), wobei das Verfahren Folgendes umfasst:
Auswählen eines Gebäudes (202);
Anzeigen einer Angabe von Etagen in dem Gebäude;
Empfangen einer Auswahl aus einer Vielzahl von definierten Etagen, wobei die definierten Etagen eine Untergruppe der Etagen sind;
Speichern der definierten Etagen; und
Erzeugen der definierten Benutzeroberfläche in Reaktion auf die definierten Etagen;
**gekennzeichnet durch**:
Empfangen einer Ausgangsetage und einer Zieletage als Reaktion auf die Auswahl eines ersten Etagensymbols (302) auf der definierten Benutzeroberfläche, wobei jedes Etagensymbol (302) einer einzigen Etage entspricht; und
Übermitteln eines Aufzugrufs als Reaktion auf die Ausgangsetage und die Zieletage.

2. Verfahren nach Anspruch 1, wobei das Auswählen des Gebäudes Folgendes umfasst:
Auswählen eines voreingestellten Gebäudes; oder
Auswählen des letzten vom Benutzer besuchten Gebäudes; oder
Empfangen einer Gebäudeauswahl eines Benutzers.

3. Verfahren nach einem der vorhergehenden Ansprüche, ferner umfassend Wechseln von der definierten Benutzeroberfläche (301), die die definierten Etagen beinhaltet, zu einer Standardbenutzeroberfläche (300), die die Etagen in dem Gebäude beinhaltet.

4. Mobile Vorrichtung (208), Folgendes umfassend:
einen Prozessor;
einen Speicher, der von einem Computer ausführbare Anweisungen umfasst, die, wenn sie von dem Prozessor ausgeführt werden, den Prozessor dazu bringen, Operationen durchzuführen, wobei die Operationen Folgendes umfassen:
Auswählen eines Gebäudes (202);
Anzeigen einer Angabe von Etagen in dem Gebäude;
Empfangen einer Auswahl aus einer Vielzahl von definierten Etagen, wobei die definierten Etagen eine Untergruppe von den Etagen sind;
Speichern der definierten Etagen; und
Erzeugen einer definierten Benutzeroberfläche (301) als Reaktion auf die definierten Etagen;
**gekennzeichnet durch**:
Empfangen einer Ausgangsetage und einer Zieletage als Reaktion auf eine Auswahl eines ersten Etagensymbols (302) auf der definierten Benutzeroberfläche, und eines zweiten Etagensymbols auf der definierten Benutzeroberfläche, wobei jedes Etagensymbol einer einzigen Etage entspricht; und
Übermitteln eines Aufzugrufs in Reaktion auf die Ausgangsetage und die Zieletage.

5. Mobile Vorrichtung nach Anspruch 4, wobei das Auswählen des Gebäudes (202) Folgendes umfasst:
Auswählen eines voreingestellten Gebäudes; oder
Auswählen des letzten vom Benutzer besuchten Gebäudes; oder
Empfangen einer Gebäudeauswahl eines Benutzers.

6. Mobile Vorrichtung nach Anspruch 4 oder 5, wobei die Operationen ferner Folgendes umfassen:
Wechseln von der definierten Benutzeroberfläche (301), die die definierten Etagen beinhaltet, zu einer Standardbenutzeroberfläche (300), die die Etagen in dem Gebäude beinhaltet.

7. Computerprogrammprodukt, das greifbar in einem von einem Computer lesbaren Medium ausgeführt ist, wobei das Computerprogrammprodukt Anweisungen beinhaltet, die, wenn sie von einem Prozessor ausgeführt werden, den Prozessor dazu bringen, Operationen durchzuführen, die Folgendes umfassen:
Auswählen eines Gebäudes;
Anzeigen einer Angabe von Etagen in dem Gebäude;
Empfangen einer Auswahl aus einer Vielzahl von definierten Etagen, wobei die definierten Etagen eine Untergruppe der Etagen sind;
Speichern der definierten Etagen; und
Erzeugen der definierten Benutzeroberfläche (301) als Reaktion auf die definierten Etagen;
**gekennzeichnet durch**:
Empfangen einer Ausgangsetage und einer Zieletage in Reaktion auf die Auswahl eines ersten Etagensymbols (302) auf der definierten Benutzeroberfläche, wobei jedes Etagensymbol (302) einer einzigen Etage entspricht; und
Übermitteln eines Aufzugrufs in Reaktion auf die Ausgangsetage und die Zieletage.

8. Computerprogrammprodukt nach Anspruch 7, wobei das Auswählen des Gebäudes (202) Folgendes umfasst:
Auswählen eines voreingestellten Gebäudes; oder
Auswählen des letzten vom Benutzer besuchten Gebäudes; oder
Empfangen einer Gebäudeauswahl eines Benutzers.

9. Computerprogrammprodukt nach Anspruch 7 oder 8, wobei die Operationen ferner Folgendes umfassen:
Wechseln von der definierten Benutzeroberfläche (301), die die definierten Etagen beinhaltet, zu einer Standardbenutzeroberfläche (300), die die Etagen in dem Gebäude beinhaltet.

## Revendications

1. Procédé pour générer une interface utilisateur personnalisée sur un dispositif mobile (208) pour faire l'interface avec un système d'ascenseur (200), le procédé comprenant :
la sélection d'un bâtiment (202) ;
la présentation d'une identification d'étages dans le bâtiment ;
la réception d'une section d'une pluralité d'étages personnalisés, les étages personnalisés étant un sous-ensemble des étages ;
la sauvegarde des étages personnalisés ; et
la génération de l'interface utilisateur personnalisée en réponse aux étages personnalisés ;
**caractérisé par** :
la réception d'un étage de départ et d'un étage de destination en réponse à une sélection d'une première icône d'étage (302) dans l'interface utilisateur personnalisée et d'une seconde icône d'étage dans l'interface utilisateur personnalisée, chaque icône d'étage (302) correspondant à un seul étage ; et
la transmission d'un appel d'ascenseur en réponse à l'étage de départ et à l'étage de destination.

2. Procédé selon la revendication 1 dans lequel la sélection du bâtiment comprend :
la sélection d'un bâtiment par défaut ; ou
la sélection du dernier bâtiment visité par un utilisateur ; ou
la réception d'une sélection de bâtiment à partir d'un utilisateur.

3. Procédé selon une quelconque revendication précédente comprenant en outre le passage de l'interface utilisateur personnalisée (301) comportant les étages personnalisés à une interface utilisateur standard (300) comportant les étages dans le bâtiment.

4. Dispositif mobile (208) comprenant :
un processeur ;
une mémoire comprenant des instructions exécutables par ordinateur qui, lorsqu'elles sont exécutées par le processeur, amènent le processeur à effectuer des opérations, les opérations comprenant :
la sélection d'un bâtiment (202) ;
la présentation d'une identification d'étages dans le bâtiment ;
la réception d'une sélection d'une pluralité d'étages personnalisés, les étages personnalisés étant un sous-ensemble des étages ;
la sauvegarde des étages personnalisés ; et
la génération d'une interface utilisateur personnalisée (301) en réponse aux étages personnalisés ;
**caractérisé par** :
la réception d'un étage de départ et d'un étage de destination en réponse à une sélection d'une première icône d'étage (302) dans l'interface utilisateur personnalisée et d'une seconde icône d'étage dans l'interface utilisateur personnalisée, chaque icône d'étage correspondant à un seul étage ; et
la transmission d'un appel d'ascenseur en réponse à l'étage de départ et à l'étage de destination.

5. Dispositif mobile selon la revendication 4, dans lequel la sélection du bâtiment (202) comprend :
la sélection d'un bâtiment par défaut ; ou
la sélection du dernier bâtiment visité par un utilisateur ; ou
la réception d'une sélection de bâtiment à partir d'un utilisateur.

6. Dispositif mobile selon la revendication 4 ou 5, les opérations comprenant en outre :
le passage de l'interface utilisateur personnalisée (301) comportant les étages personnalisés à une interface utilisateur standard (300) comportant les étages dans le bâtiment.

7. Produit de programme informatique intégré de manière tangible sur un support lisible par ordinateur, le produit de programme informatique comportant des instructions qui, lorsqu'elles sont exécutées par un processeur, amènent le processeur à effectuer des opérations comprenant :
la sélection d'un bâtiment ;
la présentation d'une identification d'étages dans le bâtiment ;
la réception d'une section d'une pluralité d'étages personnalisés, les étages personnalisés étant un sous-ensemble des étages ;
la sauvegarde des étages personnalisés ; et
la génération de l'interface utilisateur personnalisée (301) en réponse aux étages personnalisés ;
**caractérisé par** :
la réception d'un étage de départ et d'un étage de destination en réponse à une sélection d'une première icône d'étage (302) dans l'interface utilisateur personnalisée et d'une seconde icône d'étage dans l'interface utilisateur personnalisée, chaque icône d'étage (302) correspondant à un seul étage ; et
la transmission d'un appel d'ascenseur en réponse à l'étage de départ et à l'étage de destination.

8. Produit de programme informatique selon la revendication 7, dans lequel la sélection du bâtiment (202) comprend :
la sélection d'un bâtiment par défaut ; ou
la sélection du dernier bâtiment visité par un utilisateur ; ou
la réception d'une sélection de bâtiment à partir d'un utilisateur.

9. Produit de programme informatique selon la revendication 7 ou 8, les opérations comprenant en outre :
le passage de l'interface utilisateur personnalisée (301) comportant les étages personnalisés à une interface utilisateur standard (300) comportant les étages dans le bâtiment.
